# EUROPÄISCHE PATENTANMELDUNG

(11) **EP 0 661 822 A1**
(43) Veröffentlichungstag der Anmeldung: **05.07.1995**
(21) Anmeldenummer: 94113660.8
(22) Anmeldetag: 01.09.1994
(51) Int. Cl.: H04B 1/10

(54) **Schaltungsanordnung zur Unterdrückung von Störungen**

(30) Priorität: 22.12.1993 DE 4343901
(71) Anmelder: Blaupunkt-Werke GmbH, D-31132 Hildesheim (DE)
(72) Erfinder: Schuchardt, Günter, D-41141 Hildesheim (DE)

(57) **Zusammenfassung**

Bei einer Schaltungsanordnung zur Unterdrückung von Störungen in einem Multiplexsignal eines Stereo-Rundfunkempfängers, die durch Umschalten auf einen anderen Sender entstehen, insbesondere von Störungen, die durch die Differenzierung dieser Störungen entstehen, wird das Multiplexsignal kurzzeitig unterbrochen (9) und durch einen Gleichspannungswert (11,12) ersetzt, welcher dem Gleichspannungswert des Multiplexsignals angenähert ist.

## Beschreibung

Die Erfindung geht aus von einer Schaltungsanordnung nach der Gattung des Hauptanspruchs.

Bei Stereo-Rundfunkempfängern, insbesondere bei Autoradios, die zum Empfang von Radio-Daten-Signalen geeignet sind, ist vorgesehen, während des Empfangs eines Senders sogenannte alternative Frequenzen mit dem gleichen Programm auf ihre Empfangsqualität zu prüfen. Ist die Empfangsqualität besser als die des zur Zeit empfangenen Senders, wird auf den alternativen Sender umgeschaltet, während bei schlechterer Empfangsqualität wieder auf den ursprünglich empfangenen Sender zurückgeschaltet wird.

Zu dem probehalber Umschalten wird die Abstimmspannung, die üblicherweise in einer schnellen PLL-Schaltung erzeugt wird, in sehr kurzer Zeit auf den erforderlichen Wert gebracht. Bei dieser schnellen Einstellung der Sender treten große, störende Spannungsimpulse im Multiplexsignal am Ausgang des ZF-Demodulators auf. Diese Spannungsimpulse verursachen im weiteren Signalweg an differenzierenden Schaltungen, beispielsweise Koppelkondensatoren, Einschwingvorgänge mit großer Dauer und Amplitude.

Aufgabe der vorliegenden Erfindung ist es, im Falle des Umschaltens eine möglichst kurze unhörbare Signalunterbrechung zu erreichen und die obengenannten Einschwingvorgänge zu vermeiden.

Diese Aufgabe wird bei der erfindungsgemäßen Schaltungsanordnung mit den kennzeichnenden Merkmalen des Patentanspruchs 1 gelöst. Der Vorteil der erfindungsgemäßen Schaltungsanordnung besteht darin, daß einerseits für die Dauer der Änderung der Abstimmspannung - also während des Umschaltens - der Signalweg unterbrochen wird, wodurch unmittelbare Störungen vermieden werden, und daß der mittlere Gleichspannungswert an differenzierenden Schaltungen, wie beispielsweise an Koppelkondensatoren, nicht verändert wird.

Eine vorteilhafte Ausführungsform der erfindungsgemäßen Schaltungsanordnung besteht darin, daß im Weg des Multiplexsignals ein steuerbarer Schalter angeordnet ist, dessen ausgangsseitiger Anschluß über einen Widerstand und einen Kondensator mit festem Potential verbunden ist. Diese Ausführungsform gestattet eine kurze, weitgehend störungsfreie Unterbrechung des Nutzsignals, wobei der dem Gleichspannungswert des Multiplexsignals angenäherte Gleichspannungswert in einfacher Weise mit einem Kondensator erzeugt wird.

Eine andere vorteilhafte Ausführungsform ist insbesondere zur Anordnung innerhalb des ZF-Demodulators vorgesehen und besteht darin, daß im Weg des Multiplexsignals ein steuerbarer Umschalter angeordnet ist, der auf eine interne Referenzspannung eines ZF-Demodulators umschaltet, die der Nullspannung des Multiplex-Ausgangssignals des ZF-Demodulators entspricht.

Eine Weiterbildung der erfindungsgemäßen Schaltungsanordnung besteht darin, daß dem Widerstand ein weiterer steuerbarer Schalter parallel geschaltet ist, der entgegengesetzt zu dem steuerbaren Schalter steuerbar ist.

Eine Realisierung der steuerbaren Schalter mit Hilfe von C-MOS-Schaltern ist unter anderem wegen der Preiswürdigkeit derartiger Schalter besonders vorteilhaft.

Ausführungsbeispiele der Erfindung sind in der Zeichnung anhand mehrerer Figuren dargestellt und in der nachfolgenden Beschreibung näher erläutert. Es zeigt:
- Fig. 1: ein teilweise als Blockschaltbild dargestelltes erstes Ausführungsbeispiel und
- Fig. 2: ein ebenfalls teilweise als Blockschaltbild dargestelltes zweites Ausführungsbeispiel.

Gleiche Teile sind in den Figuren mit gleichen Bezugszeichen versehen. In den Blockschaltbildern sind lediglich die zur Erläuterung der Erfindung erforderlichen Teile eines Stereo-Rundfunkempfängers dargestellt.

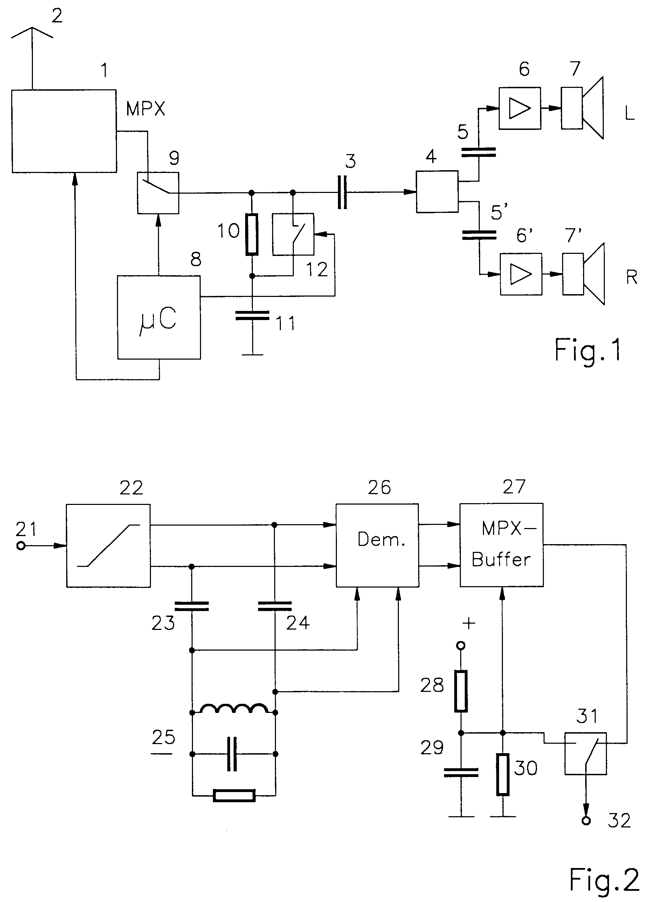

Bei dem Rundfunkempfänger nach Fig. 1 enthält ein Empfangsteil 1 alle erforderlichen Schaltungsanordnungen zum Empfang der von einer Antenne 2 zugeführten Signale bishin zur Demodulation. Das demodulierte Multiplexsignal MPX wird über einen steuerbaren Schalter 8 und über einen Koppelkondensator 3 einem Stereo-Decoder 4 zugeführt. An den Ausgang des Stereo-Decoders 4 sind über weitere Koppelkondensatoren 5, 5' die zur Wiedergabe der Audiosignale erforderlichen Einrichtungen angeschlossen, nämlich jeweils ein NF-Verstärker 6, 6' und jeweils ein Lautsprecher 7, 7'.

Ein Mikrocomputer 8 steuert verschiedene im einzelnen nicht dargestellte Funktionen des Rundfunkempfängers. Unter anderem ist der Ausgang des Mikrocomputers 8 mit einem Steuereingang des Empfangsteils 1 verbunden und kann somit die Abstimmung des Empfangsteils 1 vornehmen. Ferner ist der Mikrocomputer 8 mit einem Steuereingang des Schalters 9 verbunden.

Der Ausgang des Schalters 9 ist zusätzlich zum Koppelkondensator über eine Reihenschaltung aus einem Widerstand 10 und einem Kondensator 11 mit Massepotential verbunden. Der Widerstand 10 ist mit einem weiteren steuerbaren Schalter 12 überbrückbar.

Während des normalen Betriebes ist der Schalter 9 leitend, so daß das Multiplexsignal über den Koppelkondensator 3 zum Stereo-Decoder 4 geleitet wird. Der weitere Schalter 12 ist dabei nichtleitend. Der Widerstand 10 ist im Verhältnis zum Ausgangswiderstand des ZF-Demodulators bzw. zum Durchlaßwiderstand des Schalters 9 derart groß, daß die Übertragung des Multiplexsignals nicht beeinträchtigt wird. Die Spannung am Kondensator 11 stellt sich auf den Gleichspannungswert des Multiplexsignals ein.

Wird vom Mikrocomputer 8 ein Umschalten des Empfangsteils 1 vorgenommen, wird gleichzeitig der Schalter 9 geöffnet und der Schalter 12 geschlossen. Dadurch wird anstelle des Multiplexsignals dessen Gleichspannungswert dem Koppelkondensator 3 zugeführt, wodurch Störungen durch eine Umladung des Koppelkondensators 3 vermieden werden.

Bei geeigneter Dimensionierung kann der weitere Umschalter 12 auch entfallen, wobei dann der Gleichspannungswert über den Widerstand 10 dem Koppelkondensator 3 zugeleitet wird.

Bei dem in Fig. 2 dargestellten zweiten Ausführungsbeispiel wird ein ZF-Signal über einen Eingang 21 einem ZF-Demodulator zugeführt, der im wesentlichen aus einem Begrenzerverstärker, einem Demodulator 26 und einem MPX-Buffer 27 besteht, wobei an die Verbindungsleitungen zwischen den Begrenzerverstärker 22 und dem Demodulator 26 über Kondensatoren 23, 24 ein auf die Mittenfrequenz abgestimmter Schwingkreis 25 angeschlossen ist. Derartige ZF-Demodulatoren sind an sich bekannt und als integrierte Schaltkreise erhältlich. Eine genauere Beschreibung des ZF-Demodulators ist daher zur Erläuterung der Erfindung nicht erforderlich. Der MPX-Buffer 27 benötigt eine Referenzspannung, die aus einer positiven Spannung mit Hilfe eines Spannungsteilers 28, 30 und eines Kondensators 29 erzeugt wird. Das Multiplexsignal wird über einen Umschalter 31 einem Ausgang 32 zugeführt. Während des bereits erläuterten kurzzeitigen Umschaltens wird der Umschalter 31 in die linke Stellung gebracht, so daß zu dem Ausgang 32 die Referenzspannung - auch Nullspannung - des ZF-Demodulators geleitet wird. Dadurch werden die eingangs beschriebenen Störungen vermieden.

## Patentansprüche

1. Schaltungsanordnung zur Unterdrückung von Störungen in einem Multiplexsignal eines Stereo-Rundfunkempfängers, die durch Umschalten auf einen anderen Sender entstehen, insbesondere von Störungen, die durch die Differenzierung dieser Störungen entstehen, dadurch gekennzeichnet, daß das Multiplexsignal kurzzeitig unterbrochen und durch einen Gleichspannungswert ersetzt wird, welcher dem Gleichspannungswert des Multiplexsignals angenähert ist.

2. Schaltungsanordnung nach Anspruch 1, dadurch gekennzeichnet, daß im Weg des Multiplexsignals ein steuerbarer Schalter (8) angeordnet ist, dessen ausgangsseitiger Anschluß über einen Widerstand (9) und einen Kondensator (10) mit festem Potential verbunden ist.

3. Schaltungsanordnung nach Anspruch 1, dadurch gekennzeichnet, daß im Weg des Multiplexsignals ein steuerbarer Umschalter (31) angeordnet ist, der auf eine interne Referenzspannung eines ZF-Demodulators (22 bis 30) umschaltet, die der Nullspannung des Multiplex-Ausgangssignals des ZF-Demodulators (22 bis 30) entspricht.

4. Schaltungsanordnung nach Anspruch 2, dadurch gekennzeichnet, daß dem Widerstand (9) ein weiterer steuerbarer Schalter (11) parallel geschaltet ist, der entgegengesetzt zu dem steuerbaren Schalter (8) steuerbar ist.

5. Schaltungsanordnung nach einem der Ansprüche 2 bis 4, dadurch gekennzeichnet, daß der steuerbare Schalter (8) und gegebenenfalls der weitere steuerbare Schalter (11) als C-MOS-Schalter ausgebildet sind.
